# EUROPEAN PATENT APPLICATION

(11) **EP 1 187 046 A1**
(43) Date of publication of application: **13.03.2002**
(21) Application number: 00119686.4
(22) Date of filing: 08.09.2000
(51) Int. Cl.: G06F 17/60

(54) **Method and system to inform a user about scheduling information**

(71) Applicant: TELEFONAKTIEBOLAGET LM ERICSSON (publ), 126 25 Stockholm (SE)
(72) Inventor: Hundscheidt, Frank, 6463 BK Kerkrade (NL); Hameleers, Heino, 6471 VN Kerkrade (NL)
(74) Representative: Jostarndt, Hans-Dieter

(57) **Abstract**

The invention relates to a messaging device, capable of sending information.

According to the invention the messaging device contains at least one scheduling server (SCS) which is capable of generating scheduling information.

The invention further relates to a method for informing a user about an expected waiting time, a user equipment and to a computer program and a computer program product for handling scheduling information.

## Description

### Description

### Field of the Invention:

The present invention relates to a method for informing a user about scheduling information.

The invention further relates to a messaging device, a user equipment and a computer program product.

### Background of the Invention:

Messaging devices have made phenomenal strides in operations world-wide. Innovative solutions are required to meet increasing demand for high quality service.

Known messaging devices are for example senders of alphanumeric information as mobile telephones, capable of sending messages as for example Short Message Service (SMS) messages.

The invention further relates to user equipments which are capable of communicating within a communication system. These user equipments handle one or more communications simultaneously.

Examples of the communication, which can be push- and pull-based, include telephone calls, faxes, downloading of data or uploading of data (file transfer). However, the invention is not limited to these examples. Furthermore communication includes any special form of transfer, from connection-oriented to connectionless information transfer. Possible communications imply connectionless transfer even of information such as Short Message Service (SMS). Future wireless scenarios for wideband wireless multimedia services comprise: interactive news delivery (voice, video, e-mail, graphics), interactive e-mail (text, graphics, video clips), interactive audio (CD-quality voice, video, graphics), video conferencing, web browsing, dynamic Internet-based games, downloading large files from intranets or position/location-dependent "push" info, furthermore the presentation of information on web-sides. The web-sides contain information which is sent according to IP related protocols and/or the Wireless Application Protocol (WAP).

The Wireless Application Protocol (WAP) is a known standard for the presentation and delivery of content to terminals. However, other standards of communication can be used for the presentation and delivery of content too. The terminal can be mobile or stationary.

WAP specification states are described in the web-page http://www.wapforum.org/what/technical.htm.

Several appropriate transmission technologies for a communication between user equipment and messaging device are known.

Wireless devices represent constrained computing devices with a smaller display and a limited CPU, memory, battery life and a simple user interface. Wireless networks are constrained by low bandwidth, high latency, and unpredictable availability and stability. Wireless subscribers have a different set of essential desires and needs than desktop or even laptop Internet users. Communication-enabled devices are especially companion products that deliver timely information and accept transactions and inquiries while the user is moving around. WAP services provide pinpoint information access and delivery when full screen environment is either not available or not necessary. Some specifications as WAP or Bluetooth™ enable solutions that are air interface dependent, device independent and fully interoperable. The WAP solution leverages the tremendous investment in Web servers, Web development tools, Web programmers and Web applications while solving the unique problems associated with the wireless domain. The specification further ensures that this solution is fast, reliable and secure.

The Wireless Application Protocol is based on existing Internet standards such as Hypertext Mark Up Language (HTML), Extended Mark Up Language (XML) and Internet Protocol (IP), which are suitable for all wireless networks. The WAP specification is developed and supported by the wireless telecommunication community so that the entire industry and its subscribers can benefit from a single, open specification. Wireless service providers are able to offer a new dimension of service that complements the existing features of their networks, while extending subscribers have access to the Web. Handset manufacturers integrate microbrowser functionality, because the WAP specification is open and public. Application developers gain access to huge amount of users, while protecting and leveraging their current investments in Web technology. Subscribers gain real, anytime and anywhere information access with a simple and effective user interface, available on a variety of networks and devices.

Though many efforts to implement new services to messaging and information devices have been made, still a need for a flexible messaging device exists.

It is an object of the invention to create a device which effectively and efficiently supplies users of user equipments with scheduling information.

This problem is solved advantageously by the method of claim 1, the messaging device of claim 14, the user equipment of claim 21 and the computer program product of claim 30.

The invention makes use of the idea to evaluate automatically an actual waiting status of a user which acts as customer or as client by sending information of this status to a communication station which can be accessed by a user.

The actual waiting status is preferably evaluated in a scheduling server. The scheduling server is a logical element which is capable of generating scheduling information.

It is especially advantageous to implement a queuing/waiting service in order to be able to check certain queues with a mobile station, for example a WAP terminal.

Further advantageous embodiments and implementations of the invention are achieved according to the claims 2 to 13, 15 to 20, 22 to 29 and 31 to 36.

According to the invention calculating and transferring of queuing status are handled in a way which is entirely different from the state of the art.

When visiting locations in which limited services are supplied to a potentially higher number of people attending these services, e.g. at doctors' offices, people very often have to take into account waiting times, which last very often at least one hour. This time is usually not well spend, when people are sitting in a waiting room. The same applies for any other kind of queuing, where the servicing time is variable, fluctuating and hardly predictable. Such examples are car wash, bank (mainly when special services are needed), shops (mainly when product information is required), hospital, yearly car-check, car repair, information services, etc.

The invention enables users to receive information about the time, which they potentially have to wait and therefore enables them to perform activities outside the locations of these services.

The messaging device operates in a communication network, which is based on for example an IP-based protocol, an ATM-based network or any other packet- or circuit-switched network, where a messaging service is provided on a circuit-switched data bearer or via Unstructured Supplementary Services Data (USSD) messaging.

The communication network does not depend on a special transmission technology. Most preferably the communication network allows the user equipment to be mobile. However, it is not necessary to implement a radio transmission path. A suitable radio transmission path which can last from a few meters as for example according to the Bluethooth™ standard or cellular communication networks as GSM or UMTS is advantageous. However, a mobility in this context also implies that the user equipment can be connected to other networks, for example through a socket.

All those technologies can be advantageously used to implement a scheduling service according to the invention.

In an advantageous implementation of the method, the messaging device, the user equipment and the computer program product, the scheduling server contains a data base with scheduling information.

In a preferred embodiment of the method, the messaging device, the user equipment and the computer program product, the messaging device contains an interface for an information exchange with a data base which contains scheduling information, as for example expected waiting times of users, average waiting times for certain users, average waiting time on a certain period of time as a specific day of the week or a specific time of the day, the average waiting time for the season or the average waiting time in other time intervals.

In a preferred embodiment of the method, the messaging device, the user equipment and the computer program product, the messaging device sends the information in a format which is readable by a WAP enabled device.

In the case, that a WAP terminal is used, a conversion from HTTP/HTML to WAP-based protocols is advantageous. However, it is also possible, that the user equipment supports IP-related protocols directly, as GPRS terminals. In that case it is not necessary to perform a conversion.

In an advantageous implementation of the method, the messaging device, the user equipment and the computer program product, the information constitutes at least one notification which is sent to the user equipment. The notification can be a message as well as an announcement.

In a preferred embodiment of the method, the messaging device, the user equipment and the computer program product, the scheduling server is connected to an interface for receiving check-in messages of users. However, it is also possible, that the information is manually entered, for example by a secretary. It is especially useful to use a data base that is able to correlate a terminal identity to a corresponding user. Through a suitable software routine it is possible to determine whether a user has arrived. This can be implemented by a message which is sent from a user equipment carried by the user or by a sensor that detects that user equipment or a person carrying the user equipment has entered a certain location and is therefore enabled to trigger a software routine.

The information transfer can be transferred pull-based, for example by enabling the user equipment to access a web-page or push-based, for example by sending information to the user equipment, even if it has not requested a sending of information before.

In a preferred embodiment of the method, the messaging device, the user equipment and the computer program product, at least one scheduling server generates scheduling information from which an expected waiting time of the user is calculated and that the information about the expected waiting time is sent to a user equipment which is accessible by the user.

In an advantageous implementation of the method, the messaging device, the user equipment and the computer program product, a message which contains the scheduling information is sent to the user equipment.

In a preferred embodiment of the method, the messaging device, the user equipment and the computer program product, the information is sent according to an Internet Protocol.

In an advantageous implementation of the method, the messaging device, the user equipment and the computer program product, the information is sent according to Wireless Application Protocol related protocols.

A further object of the invention is a user equipment, capable of communicating in a multiple access communication system, characterised in that it contains means for receiving and treating scheduling information.

A mobile user equipment which is advantageously enabled for the Wireless Application Protocol (WAP) or the Universal Mobile Telecommunication System (UMTS) informs about an estimated time of service like an arrival time of a train or an expected queue length and/or a remaining waiting time. Within a preferred embodiment of the invention the information is shown in a display of the user equipment.

However in an even more advantageous implementation of the invention the user equipment contains a logical element which automatically informs the user about a waiting status, especially if an expected waiting time has reduced to a value, especially a predetermined value. The value can be entered by the user, the service instance or can be a default value.

In a preferred embodiment of the method, the messaging device, the user equipment and the computer program product, the user equipment contains means that allows a deregistration of the user from the waiting queue.

It is especially advantageous, that the user equipment gets a notification if the expected waiting time has become higher than a certain value, for example in the case that the doctor has to take care about emergencies.

The scheduling information may be updated automatically, for example whenever a client registers, leaves, or the doctor is called to an emergency situation. However, it is also possible, that the information is updated by a person.

In an advantageous implementation of the method, the messaging device, the user equipment and the computer program product, the scheduling information is available real-time.

Persons can check their remaining waiting time and spend their time doing more useful things in the meantime. It is also possible that persons inform the server that they would like to be notified when there is e.g. only 10 minutes of waiting left (the time is of course configurable by the client, since this may depend on the distance, traffic situation, etc.). This could be done by a WAP push service, but also via a normal Short Message System (SMS), Unstructured Supplementary Services Data (USSD) or any other transport mechanism. Even a terminating circuit switched data call is possible.

In an advantageous implementation of the method, the messaging device, the user equipment and the computer program product, the generation of the scheduling information and/or a notification of the user about the scheduling information depends on location data of the user. Most preferably the location data of the user are gained by a positioning system as the Global Positioning System (GPS).

In a preferred embodiment of the method, the messaging device, the user equipment and the computer program product, the messaging device is connected to an automatic (re-) scheduling element where e.g. a software agent checks the current queuing information in order to decide whether the corresponding person should make an appointment and then informs the person accordingly. Therefore it is advantageous to implement a software agent in the messaging device.

The efficiency in which services are scheduled can be further improved if the software agent of the user equipment is capable of negotiating a time for service with the software agent which is connected to the messaging device.

To initiate this method it is advantageous that the person informs the agent that he plans to receive a certain service for example a car-check. The agent, which knows the person's agenda and scheduling preferences, will negotiate with an agent at the car-repair and schedule the appointment. Rescheduling appointments is done in a similar way for example in case that the person is called for an urgent meeting.

It is possible to use the method according to the invention with an existing infrastructure and existing user equipments. In this case the user equipment receives a message about waiting status as it receives other messages.

However, it is even more advantageous to improve the user equipment with additional features as the described software agent to make an even more extended use of the functionality according to the invention.

The information to be displayed on a display of the user equipment can be defined by the user according to his personal preference. The content displayed by the user equipment depends on the need of the user and/or the complexity of the user equipment.

In a first embodiment the user equipment only displays the remaining waiting time.

In a more complex implementation the user equipment displays the remaining waiting time including a probability indicator for being served within a certain time, for example based on historical information and the number of persons in the queue.

In another more complex implementation the user equipment displays the number of persons in the queue together with an average time per person.

It is further advantageous, that the user equipment displays the current average waiting time, the minimal waiting time or the maximal waiting time in order to decide whether people should visit the service company or not.

It is advantageous to implement a client interface and/ or a serving company interface.

It is preferred to implement one or more of the following functions in the client interface.

One function is registration in the queue, another function is de-registration from the queue.

Through the client interface the user is capable of receiving waiting time information for example about the number of the customers before him or the time he has to wait.

The client interface also allows to check scheduling information and information about current average waiting time, the minimal waiting time or the maximal waiting time. Thus the client interface enables the user to decide if registration or deregistration is suitable for him.

A further object of the invention is a computer program, capable of controlling a generation of a message for a user equipment.

In a preferred embodiment of the method, the messaging device, the user equipment and the computer program product, the computer program generates the message according to scheduling information.

In an advantageous implementation of the method, the messaging device, the user equipment and the computer program product, the scheduling information is generated by the computer program.

In a preferred embodiment of the method, the messaging device, the user equipment and the computer program product, the computer program generates the scheduling information by using data stored in a data base.

In an advantageous implementation of the method, the messaging device, the user equipment and the computer program product, the computer program is capable of fetching a queue number for an attending user.

In a preferred embodiment of the method, the messaging device, the user equipment and the computer program product, the computer program uses historical information to calculate expected waiting times.

In an advantageous implementation of the method, the messaging device, the user equipment and the computer program product, the computer program applies at least one queuing algorithm to calculate scheduling information as for example expected waiting times or other parameters as maximal throughput.

In a preferred embodiment of the method, the messaging device, the user equipment and the computer program product, the computer program is capable of acting as a software agent.

In the following the invention will be further described by means of examples and by means of the figures:
- Fig. 1: shows a schematic overview of a communication system with a fixed Internet access,
- Fig. 2: shows a schematic overview of a mobile Internet access,
- Fig. 3: shows a schematic overview of a communication process between a client and a server with a gateway,
- Fig. 4: shows sequences for an advantageous implementation according to the invention.

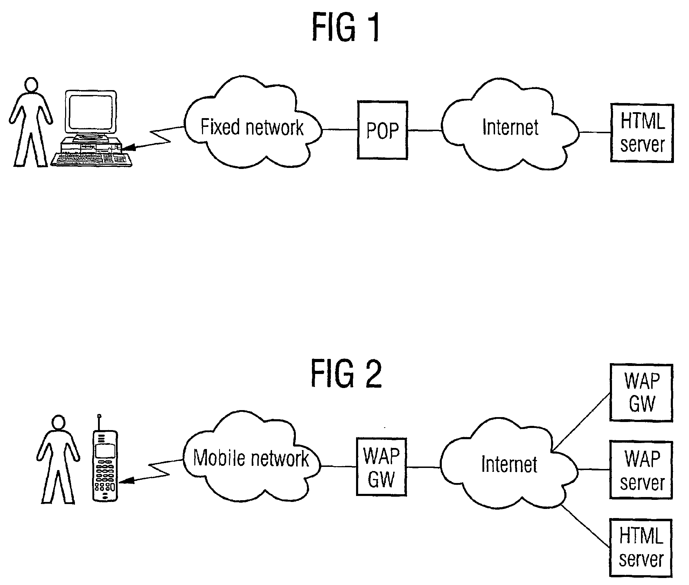

- Fig. 1: shows a schematic overview of a communication system
with a fixed Internet access. In this case the user is connected via an access server to a web-server in the Internet.

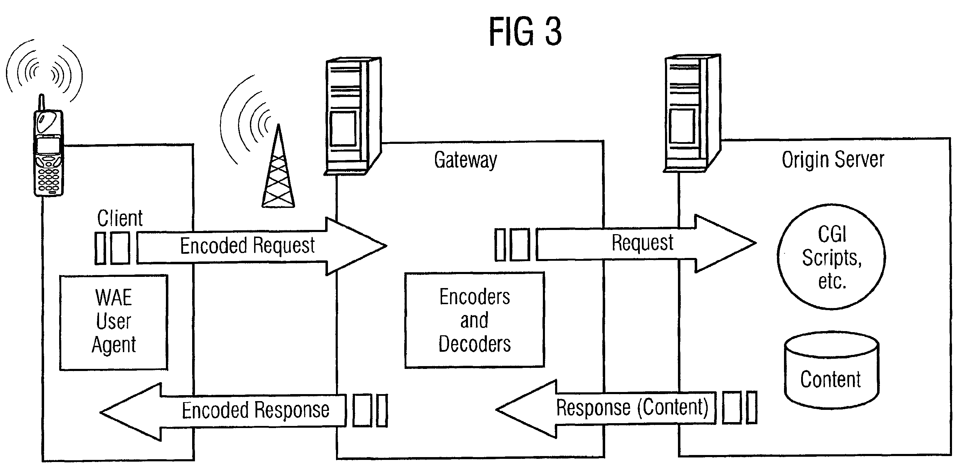

Fig. 2 shows a signalling example in case of a Wireless Application Protocol (WAP). A gateway is used to convert the WAP related protocols to standard Internet protocols, such as HTTP, HTML etc. The figure shows a scenario where a client has access to the server (pull-based) in order to get information about the remaining waiting time.

The use of a gateway is not necessary to implement the invention. Neither the invention nor any of its implementations are limited to a special gateway.

Fig. 2 shows an example with a use of an existing infrastructure according to the Wireless Application Protocol (WAP) or a Universal Mobile Telecommunication System (UMTS). Only higher layer protocols are depicted in this figure as the lower layer protocols can be chosen from a variety of protocols. Furthermore the lower layer protocols are not specific, so that they can be easily replaced by other protocols.

An example with a use of the web infrastructure is depicted in Fig. 3. A bearer between a subscriber and a scheduling server or an access server connected to the scheduling server is established.

The Internet WWW architecture provides a very flexible and powerful programming model. Applications and content are presented in standard data formats (HTML), and are browsed by applications known as web-browsers (using the HTTP protocol).

The WAP content types and protocols have been optimized for hand-held wireless devices. The WAP utilises gateway technology to connect between the wireless domain and the World Wide Web (WWW). The WAP gateway contains advantageously at least one of the following functional elements:

A protocol gateway which translates requests from the WAP protocol stack (WSP, WTP, WTLS and WDP) to the WWW protocol stack (HTTP and TCP/IP).

Content encoders translate WAP content into compact encoded formats to reduce the size of data over a network.

Content decoders decode the encoded information.

The WAP gateway allows content and applications to be hosted on standard WWW servers and to be developed using proven WWW technologies such as CGI scripting.

The communication system makes use of at least one appropriate bearer. All types of bearers used, including UMTS (circuit-switched or packet-switched bearers), W-LAN, Bluetooth™, XDSL, CATV (Cable TV), etc.

Higher layer protocols (on top of these you have the application protocols for the scheduling service). The protocols below are just examples, since other higher layer protocols may be used as well, e.g. XML, etc.

In the following a use of certain protocols is depicted to show, that the user and the scheduling server may communicate on different standards. The user communicates to the scheduling server alternatively directly through standard WWW protocols or through a gateway, wherein the communication between the user and the gateway occurs to WAP protocols and the communication between the gateway and the server occurs according to standard WWW protocols.

The client communicates with the scheduling server through a gateway. The communication between the client and the gateway occurs according to WAP protocols. The communication between the gateway and the scheduling server occurs according to standard WWW protocols. However, the whole communication can also occur according to standard WWW protocols.

The signalling scenario on lower layer protocols can be entirely different. In this case it is for example possible that the user communicates with the scheduling server through an access server. The lower layer protocol communication occurs to any appropriate transmission technology, especially according to a radio transmission technology. For future wireless scenarios an usage of UMTS bearers is especially useful. The usage of UMTS bearers can for example occur between the client and the access server.

The communication between the access server and the scheduling server occurs preferably according to Internet Protocols.

The communication between the access server and the scheduling server occurs most preferably according to an IP related protocol.

Many bearer alternatives (on both sides of the access server) may be used. E.g. packet switched (GPRS) on the left side and ATM on the right side of the access server, which may e.g. also be a lower layer conversion gateway. It is also possible that no access server or gateway is needed in case that an Internet Protocol is used as bearer between the client and the server. The application layer protocols for the scheduling service are on top of protocols as HTTP, TCP or UDP.

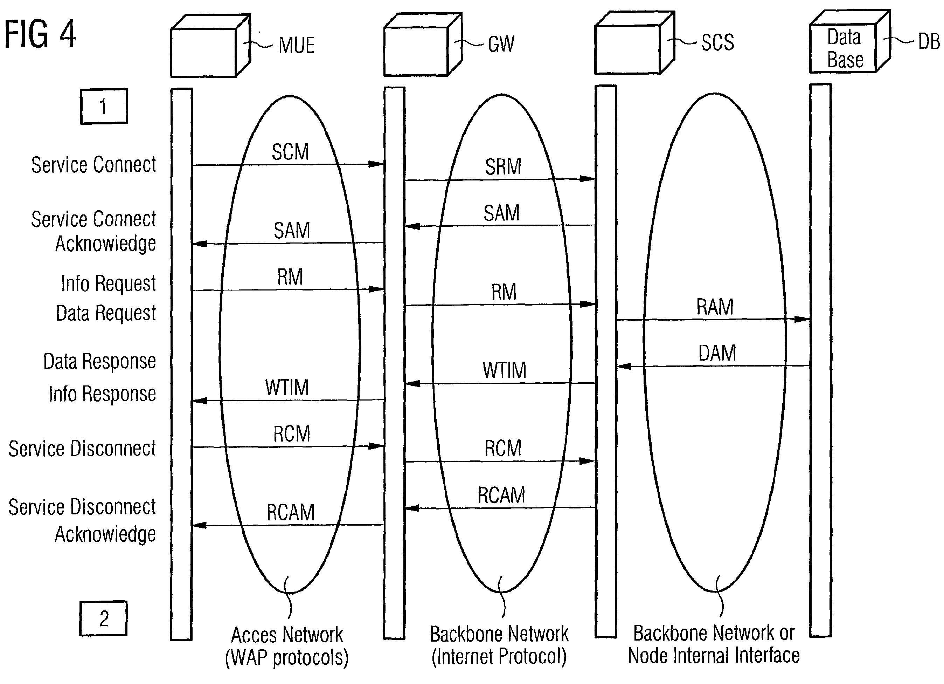

Fig. 4 shows sequences for message exchange between a user equipment and a messaging device which contains a scheduling server SCS that takes care of waiting queues. This server has an interface to the corresponding waiting queue owner (e.g. doctor's office) and to the clients (that request the queuing information from the server).

The scheduling server can be a standard data base with a software program that determines the corresponding waiting time. The server may also request the data on-line (i.e. upon request from a client) from a local data base in the doctor's office.

The software program that determines the corresponding waiting time can be of different complexity.

Advantageously it contains one or more of the afterwards described functions.

One of the functions implemented in the program can be a fetching of a client's queue number - updated whenever a person is finished or whenever a more urgent registration is done and the corresponding requesting person is scheduled later due to that fact.

In a more complex implementation the program is capable of using historical information (such as the time each person has spent for a visit at a doctors' in the past) to derive the waiting time. It is also possible to store the average visiting time for each person in order to use that for the scheduling. It may however also be possible to use average waiting time categories (e.g. 3 waiting categories) or just have one average that is used for all persons and possibly updated depending on the time of the year (e.g. more, but shorter doctor's visits during winter time, etc.).

In an even more complex implementation the program is capable of applying general queuing theories to calculate the average time in queue, average service time, occupation rate, average number being served, etc. Clients register themselves, indicating a time frame (e.g. from 1 to 4 PM) in which they would like to be served (since they are anyway shopping or working nearby and thus don't care that much when exactly they are being served). This information is then taken into account and queuing algorithms are used to determine the optimal waiting times, throughput, etc. (especially for those people that can' t afford to spend a lot of time). It is probably necessary to have some kind of incentive for these flexible persons. Such an incentive may be to have a cheaper service or a serving company may push it's clients to use the service (this of course very much depends on the service, but also on the availability of WAP terminals, the general acceptance, etc.).

The user equipment which is used as a device for receiving and treating information can be designed in different ways.

Furthermore it is advantageous to implement a serving company interface in the messaging device.

Through the serving company interface the scheduling server receives registration information from clients. This enables the scheduling server to register clients for queuing.

Persons without a user equipment or another device for registration in the queue can be registered manually, for example by a secretary of the serving company. It is also possible to allow an automatic check-in even of those potential clients which don't have a user equipment. For example the potential clients may show their presence by introducing a chip-card into a chip-card reader of the serving company. In this case the chip-card reader functions as a part of the serving company interface.

The serving company interface can be any interface that includes a proper security mechanism such as authentication and authorisation.

The serving company interface can also check all registrations.

Furthermore the serving company interface checks current average waiting time, average service time, occupation rate, average number being served, actual throughput or other potentially relevant parameters for determining waiting times of the users.

Furthermore a lot of other information may be fetched and stored via such an interface, for example statistical information, manipulations of the queues, for example in the case of emergencies, for the definition of optimization metrics and average waiting time.

In the following a signalling example is described in case of a Wireless Application Protocol (WAP). A WAP gateway is used to convert the WAP related protocols to standard Internet Protocols such as HTTP, HTML or to other Internet Protocols.

Though it is advantageous to implement a WAP gateway, the invention is not limited to examples with WAP gateways. It is possible to exchange all information in different ways without using a gateway.

The procedure described in Fig. 4 is part of a more complex communication interaction. As the other steps are not important in view of the invention, they will not be further described.

Examples of these further steps reach from set-up messages to subscription information.

A service is started by sending a service connect message SCM from the client to a WAP gateway. The WAP gateway sends a service request message SRM to a scheduling server.

The scheduling server answers by sending a service acknowledging message SAM.

Afterwards the WAP gateway sends the service acknowledging message SAM to the mobile user equipment.

Afterwards the mobile user equipment sends a registration message RM to the gateway to register the user of the mobile user equipment (MUE) to the scheduling server.

The gateway sends afterwards the registration message RM to a scheduling server, SCS.

The mobile user equipment MUE sends in the represented case the registration message RM to the WAP gateway which afterwards sends the registration message to the scheduling server SCS. However, it is also possible, that the mobile user equipment sends the registration message RM directly to the scheduling server SCS.

The scheduling server SCS afterwards sends a registration actualisation message RAM to the data base which is updated.

After the registration information in the data base DB is updated the data base DB sends a data actualisation message DAM to the scheduling server SCS.

The scheduling server SCS evaluates an expected waiting time for the user of the mobile user equipment MUE. Afterwards the scheduling server SCS or the messaging device which contains the scheduling server SCS send a waiting time information message WTIM to the WAP gateway GW.

The WAP gateway sends the waiting time information message WTIM in a format which is accessible by the mobile user equipment MUE.

If the mobile user or a software agent acting on behalf of the mobile user accept the user equipment to receive a service after the expected waiting time it sends a registration confirmation message RCM to the WAP gateway GW.

Afterwards the WAP gateway GW sends the registration confirmation message RCM to the scheduling server. The messaging device respectively the scheduling server answers the registration confirmation message RCM with a registration confirmation acceptance message RCAM to the gateway GW.

The gateway informs the mobile user equipment about the registration confirmation acceptance message RCAM.

The described messages may be combined with each other or with further messages in order to allow a more efficient service access, e.g. to combine the messages with a service connect / connect acknowledge, info request message and/or the info response and service disconnect / disconnect acknowledge messages. Furthermore, special signalling is advantageous for error cases (e.g. a service disconnect message from the server in case of a server failure). It is also possible to have additional messages for improving security, authentication or charging.

After a data response message has been received by the scheduling server, the scheduling server SCS updates its data base. An algorithm may be used to manipulate the data, calculate some results, etc. before the information is returned to the client. In case the manipulation is rather straightforward, these calculations may also be done in the data base itself.

For a further improvement of the invention it is advantageous to implement a software agent.

A software agent, which can also be called an intelligent agent, is a software entity that can monitor its environment and act autonomously, especially on behalf of a user or a creator, in order to meet its design objectives. To do this, an agent must perceive relevant aspects of its environment, plan and carry out proper actions, and communicate its knowledge to other agents and users.

Autonomy is an important feature of agents and a key aspect that distinguishes agents from objects. An object encapsulates some state, and has some control over this state in that it can only be accessed or modified via the methods that the object provides. In addition to state encapsulation, agents also encapsulate behaviour, since they have control over what actions they perform. In effect, methods are not invoked on agents, but they are requested to be performed. The agent itself decides whether to act upon the request (which is fundamentally different from objects).

Preferably the agents contain one or more of the following attributes: Persistence, what means that agents maintain a consistent internal state over time which is not changed capriciously; autonomy, what means that agents exercise exclusive control over their internal state and behaviour; reactivity, what means that agents perceive and react to changes in their environment; ability to communicate, what means that agents are able to exchange information with their environment, especially other entities as agents, users and objects.

The agents can have an even more complex functionality. This functionality can include the following features:

Initiative, what means that agents exhibit goal-directed, opportunistic behaviour and do not simply react to their environment.

Mobility, what means that agents can posses the ability to move from one location to another while preserving their internal state.

Reasoning, what means that agents can possess the ability to infer and extrapolate based on current knowledge and experiences - in a rational, reproducible way.

Ability to plan, what means that agents can synthesise and choose between different courses of action intended to achieve their aims.

Learning and adaptation, what means that agents may be able to accumulate knowledge based on past experience, and consequently modify their behaviour in response to new situations.

It is especially advantageous to use mobile agents.

Mobile agents are software processes capable of roaming wide area networks, such as the WWW, interacting with foreign hosts, performing tasks on behalf of their owners and returning "home" having performed the duties set them. A mobile agent is a program that migrates from machine to machine in a heterogeneous network. The program chooses when and where to migrate. It can suspend its execution at an arbitrary point, transport itself to another machine and resume execution.

A mobile agent environment is a software system that is distributed over a network of heterogeneous computers. Its primary task is to provide an environment in which mobile agents can roam and execute.
Agent systems are platforms that enable creation, execution, transfer and termination of agents.

Static agents reside on agent systems, whereas mobile agents roam between different agent systems. Static agents have nearly unrestricted access to local resources and they usually offer services to the mobile agents.

Mobility support may be provided by the agent and/or agent platform. When an agent is to be moved to an agent platform, a move request is sent to the agent platform. This request contains data such as the device, language and operating system that the agent uses. From that data the agent platform is able to determine whether it supports the mobile agent or not.

Mobile agent technology offers some unique advantages for collaboration devices that are WAN wide. Mobile agents can move a portion of the application code closer to where it will be utilised, thereby reducing network traffic. Mobile agents are capable of working with different software platforms. Since mobile agents are usually built on interpreters whose virtual machines provide platform independence, they can execute on machines that use different chip architectures.

The invention involves many benefits.

The most important benefits which are achieved by the invention are that waiting time for users is reduced so that they become more satisfied customers respectively clients.

Furthermore the clients can register to a service more flexible. This allows them to take benefit of services they normally would not take or not take at a certain time. For example people who can manage their time semi-flexible can use services which they would normally not use at this time. For example it becomes possible to visit a doctor or an authority in a working pause which is normally considered to be too short for these activities.

The supplier of services can offer new services such as an automatic appointment scheduling.

It is also possible to optimize servicing times and other parameters of service so that a higher throughput and less average waiting time is gained. Through an application of queuing algorithms an even more efficient reaching of these goals is possible.

The supplier gets parameters for a more accurate planing of its service. Furthermore an optimization and rationalization of services is achieved.

### List of References:

- DAM: data actualisation message
- DB: data base
- GW: WAP gateway
- RAM: registration actualisation message
- RCAM: registration confirmation acceptance message
- RCM: registration confirmation message
- RM: registration message
- SAM: service acknowledging message
- SCM: service connect message
- SCS: scheduling server
- SRM: service request message
- WTIM: waiting time information message

## Claims

1. A method for informing a user about scheduling information, **characterised by** the following steps:
- a user equipment sends a request to a scheduling server,
- the scheduling server receives the request,
- the scheduling server generates scheduling information,
- the scheduling information is sent to the user equipment.

2. The method according to claim 1, **characterised in that** a message which contains the scheduling information is sent to the user equipment.

3. The method according to any of the claims 1 or 2, **characterised in that** the messaging device sends the information in a format which is readable by a WAP enabled device.

4. The method according to any of the claims 1 to 3, **characterised in that** the scheduling information is updated automatically.

5. The method according to claim 4, **characterised in that** the information is updated if a user checks in or out.

6. The method according to any of the claims 1 to 5, **characterised in that** the scheduling information is available real-time.

7. The method according to any of the claims 1 to 6, **characterised in that** the generation of the scheduling information and/or a notification of the user about the scheduling information depends on location data of the user.

8. The method according to any of the claims 1 to 7, **characterised in that** a software agent initiates a transfer of information from and/or to the user equipment.

9. The method according to claim 8, **characterised in that** the software agent checks the scheduling information and decides whether a user which has authorized the agent should check in.

10. The method according to any of the claims 1 to 9, **characterised in that** the user equipment sends a registration message (RM) to register in the scheduling server (SCS).

11. The method according to any of the claims 1 to 10, **characterised in that** the scheduling server (SCS) sends a registration actualisation message (RAM) to the data base.

12. The method according to any of the claims 1 to 11, **characterised in that** the scheduling server (SCS) sends a waiting time information message (WTIM).

13. The method according to any of the claims 1 to 12, **characterised in that** the user equipment sends a registration confirmation message (RCM).

14. Messaging device, **characterised in that** it contains at least one scheduling server which is capable of receiving a request from a user equipment, that the scheduling server generates scheduling information and that the messaging device is capable of sending the scheduling information to the user equipment.

15. The messaging device according to claim 14, **characterised in that** the scheduling server contains a data base with expected waiting times for different users.

16. The messaging device according to any of the claims 14 or 15, **characterised in that** it contains an interface for an information exchange with a data base which contains expected waiting times of users.

17. The messaging device according to any of the claims 14 or 16, **characterised in that** it sends the information in a format which is readable by WAP enabled device.

18. The messaging device according to any of the claims 14 to 17, **characterised in that** the scheduling server is connected to an interface for receiving check-in messages of users.

19. The messaging device according to any of the claims 14 to 18, **characterised in that** it contains a software agent.

20. The messaging device according to any of the claims 14 to 19, **characterised in that** it contains a serving company interface.

21. User equipment, capable of communicating in a multiple access communication system, **characterised in that** it contains means for receiving and treating scheduling information and that it is capable of notifying a user about the scheduling information.

22. The user equipment according to claim 21, **characterised in that** it contains a logical element which automatically informs a user about waiting status.

23. The user equipment according to any of the claims 21 or 22, **characterised in that** it displays a remaining waiting time and/or a probability indicator which shows a probability for the user of being served within a certain time.

24. The user equipment according to any of the claims 21 to 23, **characterised in that** the user equipment displays a number of persons with a better waiting status than the user of the user equipment and/or a current average waiting time.

25. The user equipment according to any of the claims 21 to 24, **characterised in that** it contains a software agent.

26. The user equipment according to any of the claims 21 to 25, **characterised in that** it contains a client interface.

27. The user equipment according to any of the claims 21 to 26, **characterised in that** it is WAP enabled.

28. The user equipment according to any of the claims 21 to 27, **characterised in that** the user equipment is capable of communicating in a communication system which is designed as Universal Mobile Telecommunication System.

29. The user equipment according to any of the claims 21 to 28, **characterised in that** it contains means for allowing a deregistration of a user from a waiting queue.

30. Computer program product, **characterised in that** it generates and/or modifies scheduling information in dependency of at least one request of a user equipment.

31. The computer program product according to claim 30, **characterised in that** the computer program generates the scheduling information by using data stored in a data bank.

32. The computer program product according to any of the claims 30 or 31, **characterised in that** it is capable of fetching a queue number for an attending user.

33. The computer program product according to any of the claims 30 to 32, **characterised in that** it uses historical information to calculate expected waiting times.

34. The computer program product according to any of the claims 30 to 33, **characterised in that** it applies at least one queuing series to calculate expected waiting times.

35. The computer program product according to any of the claims 30 to 34, **characterised in that** it is capable of acting as a software agent.

36. The computer program product according to any of the claims 30 to 35, **characterised in that** it is loadable in a messaging device.
